(19) **Europäisches Patentamt**
**European Patent Office**
**Office européen des brevets**

(11) **EP 3 327 591 A1**

(12) **EUROPEAN PATENT APPLICATION**

(43) Date of publication:
**30.05.2018 Bulletin 2018/22**

(51) Int Cl.:
***G06F 17/30*** *(2006.01)*

(21) Application number: **17159807.1**

(22) Date of filing: **08.03.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.11.2016 IN 201641040814**

(71) Applicant: **Wipro Limited**
**560 035 Karnataka (IN)**

(72) Inventors:
• **SHARMA, Mohit**
**560102 Bangalore (IN)**
• **ADYAPAK, Srinivas**
**560070 Bangalore (IN)**

(74) Representative: **Finnegan Europe LLP**
**16 Old Bailey**
**London EC4M 7EG (GB)**

(54) **A SYSTEM AND METHOD FOR DATA CLASSIFICATION**

(57) A system and method for data classification are disclosed. The method includes receiving by a data classifier, a data corpus comprising one or more words. The method further includes comparing the data corpus with at least one pre-classified category of words to determine an overlap ratio between the data corpus and each of the at least one pre-classified category of words. The method further includes computing a confidence score of the data corpus for each of the at least one pre-classified category of words based on the overlap ratio and a predefined confidence score associated with the data corpus for each of the at least one pre-classified category of words. Finally, the method includes classifying the data corpus based on the confidence score into the at least one pre-classified category.

Figure 2

**Description**

Technical Field

This disclosure relates generally to artificial intelligence and, more particularly, to the area of artificial intelligence known as natural language processing. Aspects of the disclosure relate to a system and method for data classification.

Background

Data classification has huge significance in natural language processing, especially in data mining, text analysis etc. Conventional supervised data classification methods include the supervision of persons skilled in the art. The output of the data classifiers may be assessed by the persons skilled in the art, and as per their assessment, the data will be again re-fed into the classifier for improved accuracy.

However, the persons skilled in the art completely rely on their own judgment and skill, and this becomes very subjective, and can vary from person to person. This may lead to inconsistencies during the learning phase of the classifier.

For example, a data classifier system may classify the data "*Share market crashes due to stalemate in the Parliament led by political parties*" as belonging 50% to the category "politics" and 40% belonging to the category "share market". When supervised by a person skilled in the art, based on their judgment, the data may be classified as 55% belonging to politics and 35% belonging to share market. Some other person skilled in the art may classify the data as 45% belonging to politics and 48% belonging to share market. This may lead to inconsistency in training of the classifier.

**SUMMARY**

In one embodiment, a method for data clasiification is described. The method includes receiving by a data classifier, a data corpus comprising one or more words. The method further includes comparing the data corpus with at least one pre-classified category of words to determine an overlap ratio between the data corpus and each of the at least one pre-classified category of words. The method further includes computing a confidence score of the data corpus for each of the at least one pre-classified category of words based on the overlap ratio and a predefined confidence score associated with the data corpus for each of the at least one pre-classified category of words. Finally, the method includes classifying the data corpus based on the confidence score into the at least one pre-classified category.

In another embodiment, a system for data classification is disclosed. The system includes at least one processor and a memory. The memory stores instructions that, when executed by the at least one processor, causes the at least one processor to perform operations including, receiving by a data classifier, a data corpus comprising one or more words. The operations further include comparing the data corpus with at least one pre-classified category of words to determine an overlap ratio between the data corpus and each of the at least one pre-classified category of words. The memory may further include instructions to compute a confidence score of the data corpus for each of the at least one pre-classified category of words based on the overlap ratio and a predefined confidence score associated with the data corpus for each of the at least one pre-classified category of words. Finally the memory may include instructions to classify the data corpus based on the confidence score into the at least one pre-classified category.

In another embodiment, a non-transitory computer-readable storage medium for assistive photography is disclosed, which when executed by a computing device, cause the computing device to perform operations including receiving by a data classifier, a data corpus comprising one or more words. The operations further include comparing the data corpus with at least one pre-classified category of words to determine an overlap ratio between the data corpus and each of the at least one pre-classified category of words. The operations may further include computing a confidence score of the data corpus for each of the at least one pre-classified category of words based on the overlap ratio and a predefined confidence score associated with the data corpus for each of the at least one pre-classified category of words. Finally, the operations may include instructions to classify the data corpus based on the confidence score into the at least one pre-classified category. It is to be understood that the foregoing general description and the following detailed description are exemplary and explanatory only and are not restrictive of the invention, as claimed.

**BRIEF DESCRIPTION OF THE DRAWINGS**

The accompanying drawings, which are incorporated in and constitute a part of this disclosure, illustrate exemplary embodiments, and together with the description, serves to explain the disclosed principles.

Figure 1 illustrates a data classifier in accordance with some embodiments of the present disclosure.
Figure 2 illustrates an exemplary method for data classification in accordance with some embodiments of the present disclosure.

Figure 3 is a block diagram of an exemplary computer system for implementing embodiments consistent with the present disclosure.

## DETAILED DESCRIPTION

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

Embodiments of the present disclosure provide a system and method for data classification. The present subject matter obtains a data corpus, where the data corpus may be a sentence or a paragraph. The sentence or the paragraph includes one or more words. Subsequently, the data corpus may be compared with at least one pre-classified category of words, to determine an overlap ratio, between the data corpus and at least each one of the pre-classified category of words. On determination of the overlap ratio, a confidence score may be computed based on the overlap ratio and a predefined confidence score, associated with the data corpus for each of the pre-classified category of words. The present subject matter may classify the data corpus based on the confidence score computed into the at least one pre-classified category.

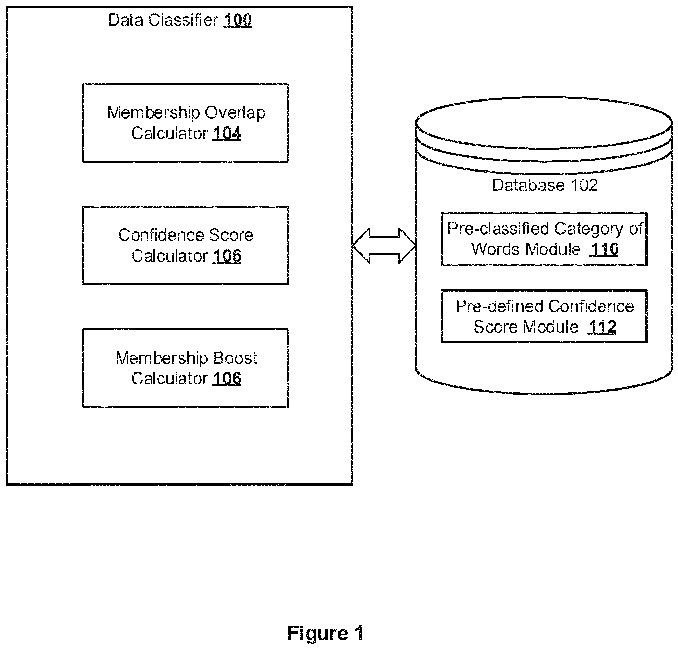

Figure 1 illustrates a data classifier 100 in accordance with some embodiments of the present disclosure. The data classifier 100 may be communicatively coupled with a database 102. The data classifier 100 comprises a membership overlap calculator (MOC) 104, a confidence score calculator (CSC) 106 and a membership boost calculator (MBC) 108.

Further, the data classifier 100 may communicate with the database 102, through a network. The network may be a wireless network, wired network or a combination thereof. The network can be implemented as one of the different types of networks, such as intranet, local area network (LAN), wide area network (WAN), the internet, and such. The network may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the network may include a variety of network devices, including routers, bridges, servers, computing devices, storage devices, etc. In some embodiments, the database 102 may be a local database present within the data classifier 100.

As shown in Figure 1, the database 102 may include at least one pre-classified category of words module 110 and a pre-defined confidence score module 112. The pre-classified category of words module 110, stores a collection of words pre-classified into different categories. In an example, the categories may be related to finance, such as banking, security, insurance. As another example, the categories may be related to a ticketing system for providing technical support to users of a computer system, and may include categories such as printer issues, network issues etc. In an example, the words payment, EMI, risk, principal, review etc may be the pre-classified category of words stored in the pre-classified category of words module 110 under the different categories.

In some embodiments, a bag of words model may be used to separate and classify the words from a data corpus. The data corpus may be a sentence or a paragraph or a document, which may be an input to the data classifier 100. The data corpus may be a combination of one or more words. In the bag of words model, the data corpus may be represented as the bag of its words, disregarding grammar and even word order but keeping multiplicity. The frequency of occurrence of each word is used as a feature for training a classifier for data classification. In an example, at least one or more training data corpus may be input in the data classifier 100 and the words may be classified into the predefined categories. These pre-classified words may be stored in the pre-classified category of words module 110.

The database 102 may comprise the pre-defined confidence score module 112. In some embodiments, confidence score may be the probability of how much or to what extent a data corpus belongs to a particular category. The data classifier 100 may assign confidence scores to each data corpus. In an example, the data corpus may be "The share prices of General Motors cars have fallen due to labor strikes". The data classifier 100 may assign confidence scores of the corpus as 50% for category cars, 40% for category share market and 30% for category labor laws. These may be stored in the pre-defined confidence score module 112 as the predefined confidence scores for the particular data corpus for the categories.

The data classifier 100 may be implemented on variety of computing systems. Examples of the computing systems may include a laptop computer, a desktop computer, a tablet, a notebook, a workstation, a mainframe computer, a smart phone, a server, a network server, and the like. Although the description herein is with reference to certain computing systems, the systems and methods may be implemented in other computing systems, albeit with a few variations, as will be understood by a person skilled in the art.

In operations, to classify data, the MOC 104 may receive a data corpus, which may be interchangeably referred to as the problem statement, comprising one or more words. In some embodiments, the data corpus as mentioned earlier may be a sentence, a paragraph or a document. In some embodiments, the MOC 104 may use the bag of words model to break down the data corpus into its constituent words. In some other embodiments, the conjunctions, articles and prepositions may be removed from the bag of words created by the MOC 104. In some other embodiments, some prepositions or conjunctions may be retained in the bag of words to find a causal link between the words, to assist in data classification. Wherever the bag of words model is used, the bag of words created from the data corpus may be referred to as the data corpus.

On receiving the data corpus, the MOC 104 may compare the bag of words created from the data corpus, to each of the at least one pre-classified category of words to determine an overlap ratio between the data corpus and each of the at least one pre-classified category of words. In some embodiments, the overlap ratio may be based on one or more words common between the data corpus and the at least one pre-classified category of words. The pre-classified category of words may be retrieved from the pre-classified category of words module 110.

In some embodiments, the overlap ratio may be calculated by the MOC 104, using equation 1.

$$OR= (F/N_1) * (F/N_2)\dots\dots\dots\dots\dots\dots\dots\dots\dots\dots\text{Equation 1.}$$

Where:

OR = Overlap Ratio

F = The number of common words between the data corpus and each of the at least one pre-classified category of words.

$N_1$ = The total number of words in the data corpus

$N_2$ = The total number of words in each of the at least one pre-classified category of words.

It can be seen from Equation 1 that the overlap ratio, OR, indicates the extent to which there is commonality (or overlap) between the data corpus and a particular category of words.

In an example, let the data corpus (Data Corpus 1) be "Salary payday for majority of companies is on the last day of every month, and since most of the salary payments are disbursed online, banks have heightened their security to avoid fraudulent transactions". Here using the bag of words model, we can create a bag of words which may be Salary, Payday, majority, companies, last, day, every, month, most, salary, payments, disbursed, online, banks, heightened, security, avoid, fraudulent, transactions. The MOC 104 may comprise of three different categories in the pre-classified category of words module 110, each containing a collection of words, which are the pre-classified category of words. As an example, the categories of words may be Insurance, Banking and Security. Table 1 shows the pre-classified category of words which may be present in under each of the categories.

| Table 1 | | |
|---|---|---|
| Category (C1): Insurance | Category (C2): Banking | Category (C3): Security |
| Payment | Payment | Payout |
| EMI | Payday | Principal |
| Principal | Savings | Share |
| Review | Account | Stock |
| Claim | Loan | Mutual |
| Processing | Processing | Futures |
| Penalty | Interest | Trade |

According to Equation 1, the OR of the data corpus 1 for category C1 may be:

$$OR = 1/19 * 1/7 = 1/133$$

Again, according to Equation 1, the OR of the data corpus 1 for category C2 may be:

$$OR = 2/19 * 2/7 = 4/133$$

The Overlap Ratio may then be received by the CSC 106. The CSC 106 may compute a confidence score of the data corpus for each of the at least one pre-classified category of words based on the overlap ratio and a predefined confidence score associated with the data corpus for each of the at least one pre-classified category of words. In some embodiments, the confidence score may be calculated by using the pre-defined confidence score, stored in the pre-defined confidence score module 112, and the overlap ratio. In some embodiments, the confidence score may be calculated based on Equation 2.

$$CS = 1 - ((1 - OR) * (1 - PCS))................Equation 2$$

Where:

CS = Confidence Score
PCS = Pre-defined confidence score

Based on Table 1, using Equation 2, the confidence score for data corpus 1 for category C1 is

$$CS = 1 - ((1 - 1/133) * (1 - 0.5) = .51$$

Where, let 0.5 be the pre-defined confidence score of data corpus 1 for category C1.
Based on Table 1, using Equation 2, the confidence score for data corpus 1 for category C2 is

$$CS = 1 - ((1 - 4/133) * (1 - 0.4)) = .41$$

Where, let 0.4 be the pre-defined confidence score of data corpus 1 for category C2.
The data classifier 100 may then classify the data corpus based on the confidence score computed. In some embodiments, the confidence score calculated by the data classifier 100 may display, the confidence score to a person skilled in the art of natural language processing, so that he may have an objective analysis of the data for improved classification. The confidence score may be calculated by the CSC 106, may further be stored in the Pre-defined confidence score module 112 in the database 102 as the pre-defined confidence score. This pre-defined confidence score may be further used along with a problem statement for better classification. This iterative process of using the pre-defined confidence score may improve data classification.
The confidence score calculated by the CSC 106, may be received by the MBC 108. The MBC 108 may calculate a boost value for the data corpus for a particular category. In some embodiment, the boost value may be an increase or decrease of the confidence score for a data corpus for a particular category. In some embodiments, the boost value may be the difference between the pre-defined confidence score for a particular category, stored in the pre-defined confidence score module 112, and the confidence score for a particular category calculated by the CSC 106.
In an example, if the confidence score calculated by CSC for data corpus 1 is 0.51, for category C1 and the pre-defined confidence score for data corpus 1 stored in the pre-defined confidence score module 112 is 0.05, then boost value calculated by the MBC 108 is 0.01. The boost value may indicate that the confidence value of data corpus 1 for category C1 has increased by 1 %.

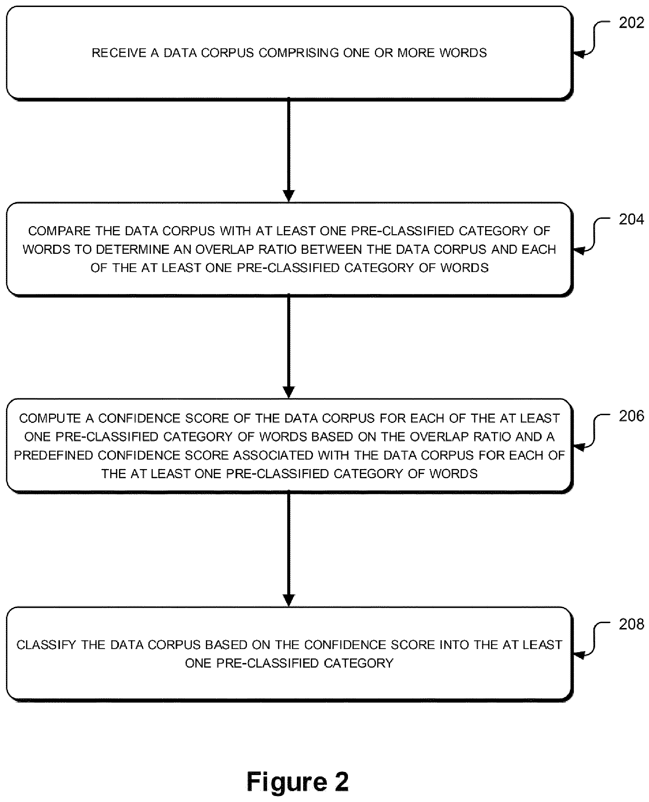

Figure 2 illustrates an exemplary method for data classification in accordance with some embodiments of the present disclosure.
The method 200 may be described in the general context of computer executable instructions. Generally, computer executable instructions can include routines, programs, objects, components, data structures, procedures, modules, and functions, which perform particular functions or implement particular abstract data types. The method 200 may also be practiced in a distributed computing environment where functions are performed by remote processing devices that are linked through a communication network. In a distributed computing environment, computer executable instructions may be located in both local and remote computer storage media, including memory storage devices.
Reference is made to Figure 2, the order in which the method 200 is described is not intended to be construed as a limitation, and any number of the described method blocks can be combined in any order to implement the method 200 or alternative methods. Additionally, individual blocks may be deleted from the method 200 without departing from the scope of the subject matter described herein. Furthermore, the method 200 can be implemented in any suitable hardware, software, firmware, or combination thereof.

With reference to Figure 2, at step 202, a data corpus comprising one or more words may be received. In an example, the data corpus may be a sentence, a paragraph or an entire document. In an example, "Printer not working due to empty ink cartridge" may be a data corpus.

In some embodiments, bag of words model may be used to break the data corpus received into constituent words, without taking into account the sequence of the words appearing in the sentence. The constituent words from the sentence may be referred to as the bag of words. Wherever the bag of words model may be used to create the bag of words, such bag of words may be referred to as the data corpus.

At step 204, the data corpus may be compared with at least one pre-classified category of words to determine an overlap ratio between the data corpus and each of the at least one pre-classified category of words. In some embodiments, the at least one pre-classified category of words may be collection of words stored in the pre-classified category of words module 110 under each category. In an example, the different categories may be insurance, banking, finance etc.

In some embodiments, the overlap ratio may be calculated by the MOC 104 based on one or more words common between the data corpus and the at least one pre-classified category of words. In some embodiments, the MOC 104 may calculate the overlap ratio, based on the number of words common between the data corpus and the at least one pre-classified category of words, the number of words in the data corpus and the number of words in the at least one pre-classified category of words.

Upon calculating the confidence score, at step 206, a confidence score of the data corpus for each of the at least one pre-classified category of words may be computed based on the overlap ratio and a predefined confidence score associated with the data corpus for each of the at least one pre-classified category of words. In some embodiments, the confidence score may be the probability of a data corpus belonging to a particular category. The pre-defined confidence score may be the confidence score initially assigned by the data classifier 100 to a data corpus. The pre-defined confidence score may be stored in the pre-defined data corpus module 112. In some embodiments, the CSC 106 may calculate the confidence score based on Equation 2 explained along with Figure 1.

After calculating the confidence score, at step 208, the data corpus may be classified based on the confidence score into the at least one pre-classified category. In some embodiments, the confidence score may be provided to a person skilled at data classification, for an objective assessment of the data.

In some embodiments, the confidence score calculated in step 206, by CSC 106 may be stored as a pre-defined confidence score for a data corpus for a particular category in the pre-defined confidence score module 112, replacing the earlier pre-defined confidence score. In some embodiments, the pre-defined confidence score may be used in the next iteration of the method 200, for more accurate classification of the data corpus.

In some embodiments, a boost value may be determined for the confidence score of the data corpus for each of the at least one pre-classified category of words based on a change in the confidence score for each of the at least one pre-classified category of words from the predefined confidence score associated with the data corpus for each of the at least one pre-classified category of words. In an example, the boost value may be the difference between the pre-defined confidence score and the confidence score calculated at step 206.

The advantages of the present invention may be the ability to provide an accurate objective assessment of data classification to a person skilled in the art of data classification. The objective criteria will reduce inconsistencies during training of the data classifier and creates a uniform accuracy across all data. Another advantage may be improved classification of the data through several iterations of the methods provided.

Computer System

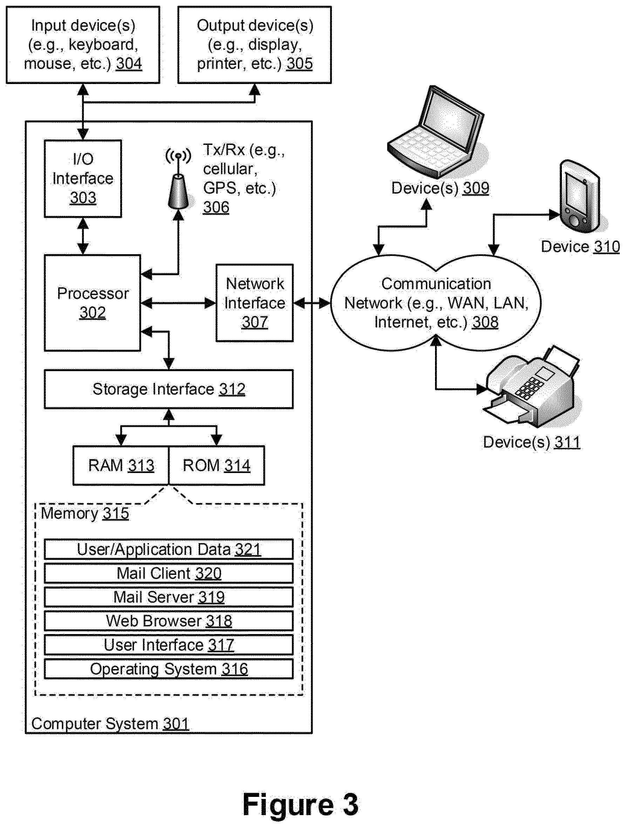

Figure 3 is a block diagram of an exemplary computer system for implementing embodiments consistent with the present disclosure. Variations of computer system 301 may be used for implementing the devices and systems disclosed herein. Computer system 301 may comprise a central processing unit ("CPU" or "processor") 302. Processor 302 may comprise at least one data processor for executing program components for executing user- or system-generated requests. A user may include a person, a person using a device such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. The processor 802 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 302 may be disposed in communication with one or more input/output (I/O) devices via I/O interface 303. The I/O interface 303 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.11 a/b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 303, the computer system 301 may communicate with one or more I/O devices. For example, the input device 304 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. Output device 305 may be a printer, fax machine, video display (e.g., cathode ray tube (CRT), liquid crystal display (LCD), light-emitting diode (LED), plasma, or the like), audio speaker, etc. In some embodiments, a transceiver 806 may be disposed in connection with the processor 302. The transceiver may facilitate various types of wireless transmission or reception. For example, the transceiver may include an antenna operatively connected to a transceiver chip (e.g., Texas Instruments WiLink WL1283, Broadcom BCM4750IUB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, the processor 302 may be disposed in communication with a communication network 308 via a network interface 307. The network interface 307 may communicate with the communication network 308. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 608 may include, without limitation, a direct interconnection, local area network (LAN), wide area network (WAN), wireless network (e.g., using Wireless Application Protocol), the Internet, etc. Using the network interface 307 and the communication network 308, the computer system 301 may communicate with devices 310, 311, and 312. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 601 may itself embody one or more of these devices.

In some embodiments, the processor 302 may be disposed in communication with one or more memory devices (e.g., RAM 313, ROM 314, etc.) via a storage interface 312. The storage interface may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc. Variations of memory devices may be used for implementing, for example, the databases disclosed herein.

The memory devices may store a collection of program or database components, including, without limitation, an operating system 316, user interface application 317, web browser 318, mail server 316, mail client 320, user/application data 321 (e.g., any data variables or data records discussed in this disclosure), etc. The operating system 316 may facilitate resource management and operation of the computer system 301. Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 317 may facilitate display, execution, interaction, manipulation, or operation of program components through textual or graphical facilities. For example, user interfaces may provide computer interaction interface elements on a display system operatively connected to the computer system 301, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system 301 may implement a web browser 318 stored program component. The web browser may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system 301 may implement a mail server 319 stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, the computer system 301 may implement a mail client 320 stored program component. The mail client may be a mail viewing application, such as Apple Mail, Microsoft Entourage, Microsoft Outlook, Mozilla Thunderbird, etc.

In some embodiments, computer system 301 may store user/application data 821, such as the data, variables, records, etc. as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of any computer or database component may be combined, consolidated, or distributed in any working combination.

The specification has described a system and method for data classification. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A method of data classification:

   receiving, by a data classifier, a data corpus comprising one or more words;
   comparing, by the data classifier, the data corpus with at least one pre-classified category of words to determine an overlap ratio between the data corpus and each of the at least one pre-classified category of words;
   computing, by the data classifier, a confidence score of the data corpus for each of the at least one pre-classified category of words based on the overlap ratio and a predefined confidence score associated with the data corpus for each of the at least one pre-classified category of words; and
   classifying, by the data classifier, the data corpus based on the confidence score into the at least one pre-classified category.

2. The method of claim 1, wherein the overlap ratio is based on one or more words common between the data corpus and the at least one pre-classified category of words.

3. The method of claim 1 or claim 2, wherein the confidence score is the probability of the data corpus belonging to a category of the at least one pre-classified category of words.

4. The method of any of the preceding claims, further comprising determining a boost value for the confidence score of the data corpus for each of the at least one pre-classified category of words based on a change in the confidence score for each of the at least one pre-classified category of words from the predefined confidence score associated with the data corpus for each of the at least one pre-classified category of words.

5. A system for data classification, comprising:

   one or more processors; and
   a memory storing instructions executable by the one or more processors for:

   receiving a data corpus comprising one or more words;
   comparing the data corpus with at least one pre-classified category of words to determine an overlap ratio between the data corpus and each of the at least one pre-classified category of words;
   computing a confidence score of the data corpus for each of the at least one pre-classified category of words based on the overlap ratio and a predefined confidence score associated with the data corpus for each of the at least one pre-classified category of words; and
   classifying the data corpus based on the confidence score into the at least one pre-classified category.

6. The system of claim 5, wherein the overlap ratio is based on one or more words common between the data corpus and the at least one pre-classified category of words.

7. The system of claim 5 or claim 6, wherein the confidence score is the probability of the data corpus belonging to a category of the at least one pre-classified category of words.

8. The system of any of claims 5 to 7, wherein the instructions are further configured to cause the one or more processors to determine a boost value for the confidence score of the data corpus for each of the at least one pre-classified category of words based on a change in the confidence score for each of the at least one pre-classified category of words from the predefined confidence score associated with the data corpus for each of the at least one pre-classified category of words.

9. A computer-readable medium storing instructions for data classification, wherein upon execution of the instructions by one or more processors, the processors perform operations comprising:

   receiving a data corpus comprising one or more words;
   comparing the data corpus with at least one pre-classified category of words to determine an overlap ratio between the data corpus and each of the at least one pre-classified category of words;
   computing a confidence score of the data corpus for each of the at least one pre-classified category of words based on the overlap ratio and a predefined confidence score associated with the data corpus for each of the at least one pre-classified category of words; and
   classifying the data corpus based on the confidence score into the at least one pre-classified category.

10. The medium of claim 9, wherein the overlap ratio is based on one or more words common between the data corpus and the at least one pre-classified category of words.

11. The medium of claim 9 or claim 10, wherein the confidence score is the probability of the data corpus belonging to a category of the at least one pre-classified category of words.

12. The medium of any of claims 9 to 11, wherein the instructions further cause the one or more processors to perform operations including determining a boost value for the confidence score of the data corpus for each of the at least one pre-classified category of words based on a change in the confidence score for each of the at least one pre-classified category of words from the predefined confidence score associated with the data corpus for each of the at least one pre-classified category of words.

Data Classifier **100**

Membership Overlap
Calculator **104**

Confidence Score
Calculator **106**

Membership Boost
Calculator **106**

Database 102

Pre-classified Category of
Words Module **110**

Pre-defined Confidence
Score Module **112**

**Figure 1**

RECEIVE A DATA CORPUS COMPRISING ONE OR MORE WORDS — 202

COMPARE THE DATA CORPUS WITH AT LEAST ONE PRE-CLASSIFIED CATEGORY OF WORDS TO DETERMINE AN OVERLAP RATIO BETWEEN THE DATA CORPUS AND EACH OF THE AT LEAST ONE PRE-CLASSIFIED CATEGORY OF WORDS — 204

COMPUTE A CONFIDENCE SCORE OF THE DATA CORPUS FOR EACH OF THE AT LEAST ONE PRE-CLASSIFIED CATEGORY OF WORDS BASED ON THE OVERLAP RATIO AND A PREDEFINED CONFIDENCE SCORE ASSOCIATED WITH THE DATA CORPUS FOR EACH OF THE AT LEAST ONE PRE-CLASSIFIED CATEGORY OF WORDS — 206

CLASSIFY THE DATA CORPUS BASED ON THE CONFIDENCE SCORE INTO THE AT LEAST ONE PRE-CLASSIFIED CATEGORY — 208

# Figure 2

**Figure 3**

Europäisches
Patentamt
European
Patent Office
Office européen
des brevets

**EUROPEAN SEARCH REPORT**

Application Number

EP 17 15 9807

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/090197 A1 (LIGHTNING SOURCE INC [US]) 9 June 2016 (2016-06-09) * paragraphs [0008] - [0014], [0073] - [0076], [0087], [0133], [0138], [0163], [0184], [0187] - [0194]; figures 1,4,5,14 * | 1-12 | INV. G06F17/30 |
| X | EP 2 784 734 A1 (WAL MART STORES INC [US]) 1 October 2014 (2014-10-01) * paragraphs [0037] - [0045], [0056] - [0060], [0068] - [0071]; figures 1-4 * | 1-12 | |
| X | US 2008/097982 A1 (GUPTA ABHINAV [US]) 24 April 2008 (2008-04-24) * paragraphs [0016], [0017], [0048], [0063] - [0066], [0070] - [0072]; claims * | 1-12 | |

| | | |
|---|---|---|
| | | TECHNICAL FIELDS SEARCHED (IPC) |
| | | G06F G06Q |

The present search report has been drawn up for all claims

| Place of search | Date of completion of the search | Examiner |
|---|---|---|
| Munich | 9 June 2017 | Herry, Tzvetanka |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 15 9807

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2017

| Patent document cited in search report | | Publication date | Patent family member(s) | | Publication date |
|---|---|---|---|---|---|
| WO 2016090197 | A1 | 09-06-2016 | US<br>WO | 2016162576 A1<br>2016090197 A1 | 09-06-2016<br>09-06-2016 |
| EP 2784734 | A1 | 01-10-2014 | EP<br>US | 2784734 A1<br>2014297570 A1 | 01-10-2014<br>02-10-2014 |
| US 2008097982 | A1 | 24-04-2008 | NONE | | |

EPO FORM P0459

For more details about this annex : see Official Journal of the European Patent Office, No. 12/82